# EUROPÄISCHE PATENTSCHRIFT

(11) **EP 2 912 105 B1**
(45) Veröffentlichungstag und Bekanntmachung des Hinweises auf die Patenterteilung: **20.03.2024**
(21) Anmeldenummer: 13752642.2
(22) Anmeldetag: 26.08.2013
(51) Int. Cl.: C08G 18/66, C09D 175/04, C08J 7/043, C08J 7/046, C08J 7/04, C08G 18/78, C08G 18/79, C08G 18/08

(54) **VERFORMBARE FOLIE**
DEFORMABLE FILM
FILM DÉFORMABLE

(30) Priorität: 29.10.2012 DE 102012110327
(43) Veröffentlichungstag der Anmeldung: 02.09.2015
(73) Patentinhaber: Benecke-Kaliko AG, 30419 Hannover (DE); Covestro Deutschland AG, 51373 Leverkusen (DE)
(72) Erfinder: IBEN, Dirk, 23611 Sereetz (DE); KOCH, Heino, 30161 Alfeld (DE); REUSCH, Stefan, 72555 Metzingen (DE); KLIPPERT, Uwe, 51399 Burscheid (DE); MELCHIORS, Martin, 42799 Leichlingen (DE); SCHRINNER, Marc, Claudius, 51103 Köln (DE); GEWISS, Heinz, Dietmar, 40668 Meerbusch (DE)
(74) Vertreter: Continental Corporation
(86) Internationale Anmeldenummer: PCT/EP2013/067602
(87) Internationale Veröffentlichungsnummer: WO 2014/067690

(56) Entgegenhaltungen:
- EP-A1- 1 418 192
- EP-A1- 2 113 527
- EP-A1- 2 216 352
- EP-A1- 2 216 353
- WO-A1-2011/045420
- DE-A1- 10 004 499

## Beschreibung

Die Erfindung betrifft eine geprägte, verformbare Folie mit einer Dekoroberfläche.

Dekoroberflächen für Formteile, insbesondere aus einem mit einer Folie versehenen Kunststoffmaterial, sind weitreichend bekannt. In DE 10 2006 011 159 A1 wird beispielsweise ein Verfahren zur Herstellung einer thermoplastischen Folie mit einer dreidimensional strukturierten, geprägten Oberfläche beschrieben. DE 10 2006 019 867 A1 wiederum offenbart ein Verfahren zur Herstellung von warmverformbaren Kunststoff-Formteilen nach dem Negativ-Tiefziehverfahren.

Die Dekoroberfläche enthält zumeist eine Beschichtung, vorzugsweise eine Deck- und / oder Lackschicht, wobei die Lackschicht aus einer oder mehreren (bis zu sechs) gleichen oder differierenden Formulierungen bestehen kann. Diese Formulierungen bestehen jeweils aus einem oder mehreren Polymerharzen, einem oder mehreren Mattierungsmitteln, gegebenenfalls verschiedenen Vernetzungskomponenten und weiteren Additiven, zum Beispiel zur Einstellung der Abriebfestigkeit, des Reibungsverhaltens, der (Berühr-)Haptik, der Rheologie und der Licht- und Wärmebeständigkeit. Die Zugabe farbgebender Komponenten, wie Farbstoffe und / oder Pigmente, ist in der Praxis ebenfalls üblich.

Die gesamte Lackschicht kann aus mehreren Schichten gleicher oder differierender Formulierungen aufgebaut sein, wobei nicht jede Schicht obige Komponenten enthalten muss. Häufig ist die Dekoroberfläche mit einer Zwei-Schicht-Lackierung aus Fondlack und Schlußlack oder aber auch als Drei-Schicht-Lackierung aus Primer, Fondlack und Schlußlack versehen. Der Primer übernimmt hierbei die Haftvermittlung zwischen dem Substrat, welches die Dekoroberfläche bildet, und den darüberliegenden Lackschichten. Der Fondlack kann mehrere Aufgaben übernehmen: beispielsweise die Darstellung der Mattigkeit, Haftvermittlung zwischen Substrat und Schlußlack, etc. Der Schlußlack hat allgemein die Aufgabe, die Dekoroberflächeneigenschaften auf die Kundenwünsche einzustellen.

Derartige Formulierungen sind beispielsweise aus DE 10 2007 059 090 A1, WO 01/23482 A1 oder auch aus DE 10 2009 049 630 A1 bekannt. DE 10 2007 059 090 A1 beschreibt Wasser-basierende Polymermischungen für Dekoroberflächen zur Verbesserung der Dauergebrauchstüchtigkeit, während in DE 10 2009 049 630 A1 Wasser-basierende und NMP-freie Polymermischungen und deren Applikation auf Folien für Dekoroberflächen offenbart werden. In WO 01/23482 A1 werden Wasser-basierende Polyurethanlacke für Elastomere, die mindestens eine Verbindung mit blockierten Isocyanatgruppen enthält, beschrieben. Weitere Polyurethanbasierte Zusammensetzungen für verschiedenste Anwendungszwecke sind bspw. aus EP 2 216 352 A1, EP 2 216 353 A1, EP 1 418 192 A1 oder EP 2 113 527 A1 bekannt.

Zur Darstellung dreidimensionaler Dekoroberflächen aus einem planen, ebenen Kunststoffmaterial, bevorzugt eine Tiefziehfolie, muss das Kunststoffmaterial verstreckt werden. In Abhängigkeit der Bauteilgeometrie können partiell Verstreckungen bis 500% und mehr auftreten. Derartige Tiefziehfolien werden in planem Zustand mit einer Beschichtung, bevorzugt mit einer Lackierung, ausgerüstet und werden meist anschließend mit einer Dekornarbe geprägt. Die bei dieser Herstellvariante verwendeten Lacke werden auch als Tiefziehlacke bezeichnet. Alternativ werden lackierte Tiefziehfolien verstreckt und im Bauteil geprägt
Die Dekornarbe auf der Dekoroberfläche besteht aus Erhöhungen, welche als Narbkuppen bezeichnet werden, und aus Vertiefungen, welche als Narbtäler bezeichnet werden. Bei der Abprägung der Dekornarbe wird der Tiefziehlack unterschiedlich stark verstreckt. Im Bereich der Narbtäler wird der Tiefziehlack stärker verstreckt als im Bereich der Narbkuppen.

Wird diese geprägte Folie anschließend zum Bauteil verarbeitet, zum Beispiel mittels Tiefziehen, so wird zusätzlich die gesamte Dekoroberfläche verstreckt. Allerdings erfolgt dieses Verstrecken ebenfalls unterschiedlich stark. Der Tiefziehlack im Bereich der Narbtäler wird stärker verstreckt als in den Bereichen der Narbkuppen. Wird die Reißdehnung des Tiefziehlacks überschritten, erfolgt ein Aufreißen der Dekoroberfläche. Dieses Aufreißen ist u.a. erkennbar in Form von Vergrauung und / oder Glanzstellen in den Narbtälern. Derartige Oberflächendefekte sind unerwünscht.

Aus den bisher bekannten Folien mit einer Dekoroberfläche ergeben sich zusammengefasst folgende Nachteile:
- Die Dekoroberfläche soll eine gleichmäßig tiefe Mattigkeit aufweisen. Diese in der Planware dargestellte Mattigkeit kann in der Bauteilherstellung nicht auf der gesamten finalen Dekoroberfläche gehalten werden.
- Die Dekoroberfläche zeigt in Abhängigkeit der Verstreckung eine ungleichmäßige Erhöhung des Glanzgrades. Die gewünschte gleichmäßige Mattigkeit über die gesamte Dekoroberfläche ist damit nicht gegeben.
- Die Dekoroberfläche zeigt in den Bereichen mit hoher Verstreckung Aufglänzen, insbesondere in Narbtälern, hervorgerufen durch Mikrorisse oder ähnliches. Häufig tritt zusätzlich ein Vergrauen der Dekoroberfläche auf.
- Die Emissionen der Dekoroberflächen für Formteile aus einem mit einer Folie versehenem Kunststoffmaterial im Automobilinnenraum genügen nicht den Anforderungen des Marktes, zum einen quantitativ, d.h. die Emissionen sind zu hoch, und zum anderem qualitativ, z. Bsp. durch Vorhandensein von Toluol.
- Die benötigte Abspalttemperatur für die Reaktion mit blockierten Isocyanatgruppen erfordert Temperatur-Trocknerverweilzeitprofile, die für Dekoroberflächenfolien weder technisch noch betriebswirtschaftlich realisierbar sind. Das Blockierungsmittel der blockierten Isocyanatgruppen erzeugt zusätzlich unerwünschte Emissionen und Gerüche.

Somit entsprechen die in den lediglich beispielhaft genannten Druckschriften offenbarten Dekoroberflächen nicht mehr den Anforderungen des aktuellen Marktes.

Daher liegt der vorliegenden Erfindung nun die Aufgabe zu Grunde, eine geprägte, verformbare Folie mit einer Dekoroberfläche, insbesondere zur Verwendung im Automobilinnenraum, zur Verfügung zu stellen, bei dem die Dekoroberfläche eine gleichbleibend tiefe Mattigkeit aufweist. Die Mattigkeit soll frei einstellbar sein.

Die Dekoroberfläche soll weder ein Aufglänzen zeigen, noch sollen Risse oder Mikrorisse vorhanden sein. Gleichzeitig soll das mehrflächige Verbundgebilde mit einer Dekoroberfläche emissionsarm sein und ein neutrales Farbverhalten, d.h. kein Vergrauen und keinen Farbdrift, zeigen.

Gelöst wird die Aufgabe dadurch, dass die geprägte, verformbare Folie eine Dekoroberfläche aufweist, welche mit wenigstens einer Beschichtung versehen ist, die folgende Bestandteile enthält:
a) eine wässrige Dispersion eines Hydroxy-funktionellen Prepolymers, erhältlich durch Umsetzung wenigstens der folgenden Komponenten:
   i) einer Hydroxygruppen aufweisenden Polycarbonatpolyol,
   ii) einem Hydroxygruppen aufweisenden Polyesterpolyol,
   iii) einem Isocyanatgruppen aufweisendem Polyisocyanat,
   iv) einer Verbindung, die wenigstens zwei gegenüber Isocyanatgruppen reaktive Gruppen und wenigstens eine zur Anionenbildung befähigte Gruppe aufweist,
   v) Wasser,
   wobei die Komponenten i) bis iii) und das Verhältnis der Komponenten i) bis iii) so gewählt werden, dass gegenüber den Isocyanat Gruppen ein Überschuss an Hydroxy Gruppen vorhanden ist, und
b) Nanopartikel mit einer zahlenmittleren Partikelgröße gemessen mittels Laserkorrelationsspektroskopie von 5 bis 100 nm, wobei die Nanopartikel Siliziumdioxid, Titandioxid, Aluminiumoxid, Aluminiumdioxid, Mangandioxid, Manganoxid, Zinkoxid, Zinkdioxid, Ceroxid, Cerdioxid, Eisenoxid, Eisendioxid und / oder Calciumcarbonat umfassen oder daraus bestehen, und
c) einen Vernetzer, der wenigstens zwei gegenüber Hydroxygruppen reaktive Gruppen aufweist.

Überraschenderweise wurde gefunden, dass sich auf der Basis der oben beschriebenen Bestandteile eine Beschichtung erzielen lässt, die der geprägte, verformbaren Folie eine durchgängige Mattigkeit sowohl in den Narbtälern als auch auf den Narbkuppen, insbesondere nach dem Tiefziehverfahren, verleiht und gleichzeitig emissionsarm ist. Dadurch wird es möglich, den oben erwähnten Anforderungen des Marktes gerecht zu werden.

Erfindungsgemäß wird unter einer gegenüber Isocyanatgruppen reaktiven Gruppe eine Gruppe verstanden, die mit einer Isocyanat Gruppe unter Ausbildung einer kovalenten Bindung reagieren kann. Beispiele für gegenüber Isocyanatgruppen reaktive Gruppen sind Hydroxyl- und Amingruppen.

Unter einer zur Anionenbildung befähigten Gruppe wird erfindungsgemäß eine Gruppe verstanden, die vom molekularen Zustand in den anionischen Zustand übergehen kann. Hierzu eignen sich beispielsweise Dicarbonsäuren, Hydroxymonocarbonsäure oder Dihydroxymonocarbonsäure.

Beispiele für geeignete Dicarbonsäuren sind Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itakonische Säure, Malonsäure, Suberische Säure, 2-Methylbernsteinsäure, 3,3-Diethylglutarsäure, 2,2-Dimethylbernsteinsäure. Die entsprechenden Anhydride dieser Säuren können sich ebenfalls eignen.

Es ist auch möglich Monocarbonsäuren, wie beispielsweise Benzoesäure und Hexancarbonsäure einzusetzen. Vorausgesetzt, die Funktionalität des Polyols ist größer 2. Gesättigte aliphatische oder aromatische Säuren sind bevorzugt. Dies sind beispielsweise Adipinsäure oder Isophthalsäure. Es ist gegebenenfalls ebenso möglich geringe Mengen an Polycarbonsäure einzusetzen, wie beispielsweise Trimellitsäure.

Hydroxycarbonsäuren, die als Reaktionspartner bei der Herstellung der Polyesterpolyole dienen tragen endständige Hydroxylgruppen. Dies sind beispielsweise Hydroxycapronsäure, Hydroxybuttersäure, Hydroxydecansäure, Hydroxystearinsäure und andere entsprechende. Geeignete Laktone sind beispielsweise Caprolactone oder Butyrolactone.

Erfindungsgemäß besitzen die Nanopartikel eine zahlenmittlere Partikelgröße von 5 bis 100 nm.

Die mittlere Partikelgröße wurde mittels Laserkorrelationsspektroskopie gemessen.

Ebenfalls bevorzugt ist, wenn die Nanopartikel eine spezifische Oberfläche von 100 m²/g bis 1000 m²/g, bevorzugt von 200 bis 500 m²/g und besonders bevorzugt von 250 bis 400 m²/g aufweisen.

Die Bestimmung der spezifische Oberfläche der Nanopartikel kann gemäß BET-Methode (DIN ISO 9277:2003-05) erfolgen.

Die Nanopartikel umfassen oder bestehen erfindungsgemäß aus Siliziumdioxid, Titandioxid, Aluminiumoxid, Aluminiumdioxid, Mangandioxid, Manganoxid, Zinkoxid, Zinkdioxid, Ceroxid, Cerdioxid, Eisenoxid, Eisendioxid und / oder Calciumcarbonat. Bevorzugt können sie aus Siliziumdioxid bestehen.

In Weiterbildung der Erfindung ist vorgesehen, dass das Beschichtungsmittel zusätzlich wenigstens ein Mattierungsmittel d) umfasst.

Bespiele für geeignete Mattierungsmittel sind Acematt 3300, Acematt^{®} 3200 von Evonik, als auch Acematt^{®} TS 100 und Acematt^{®} OK 412 von Evonik oder auch Polymatte^{®} von Stahl oder Astacin ^{®}Novomatt von BASF.

Erfindungsgemäß ist die Hydroxy Gruppen aufweisende Komponente i) ein Polycarbonatpolyol.

Geeignete Polycarbonate sind beispielsweise durch Umsetzung von Diphenylcarbonat, Dimethylcarbonat oder Phosgen mit Polyolen, bevorzugt Diolen erhältlich. Als Diole können dabei z.B. Ethylenglykol, 1,2- und 1,3-Propandiol, 1,3- und 1,4-Butandiol, 1,6-Hexandiol, 1,8-Octandiol, Neopentylglykol, 1,4-Bishydroxymethyl-cyclohexan, 2-Methyl-1,3-propandiol, 2,2,4-Trimethylpentandiol-1,3, Dipropylen-glykol, Polypropylenglykole, Dibutylenglykol, Polybutylenglykole, Bisphenol A, Tetrabrombisphenol A aber auch Lacton-modifizierte Diole verwendet werden. Bevorzugt ist, wenn das Diol 40 bis 100 Gew.-% Hexandiol, bevorzugt 1,6-Hexandiol und / oder Hexandiol-Derivate, besonders bevorzugt solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol Caprolacton oder durch Veretherung von Hexandiol mit sich selbst zum Di- oder Trihexylenglykol erhalten wurden, enthält.

Auch die in der DE-A 37 17 060 beschriebenen Polyether-Polycarbonatdiole können eingesetzt werden.

Bevorzugt sind die Polycarbonatpolyole linear aufgebaut. Sie können jedoch gegebenenfalls durch den Einbau polyfunktioneller Komponenten, insbesondere niedermolekularer Polyole, leicht verzweigt werden. Hierzu eignen sich beispielsweise Glycerin, Trimethylolpropan, Hexantriol-1,2,6, Butantriol-1,2,4, Trimethylolethan, Pentaerythrit, Chinit, Mannit, und Sorbit, Methylglykosid oder 1,3:4,6-Dianhydrohexite.

Bevorzugt ist auch, wenn das Polycarbonatpolyol ein gewichtsmittleres Molekulargewicht von 500 bis 3000 g/mol, bevorzugt 650 bis 2500 g/mol und besonders bevorzugt 1000 bis 2200 g/mol aufweist.

Das gewichtsmittlere Molekulargewicht des Polycarbonatpolyols kann mittels GPC (Gelpermeationschromatographie) bestimmt werden.

Bei dem Hydroxy Gruppen aufweisenden Polyesterpolyol ii) kann es sich insbesondere um Verbindungen handeln, die ein zahlenmittleres Molekulargewicht Mₙ von 400 bis 6000 Da und bevorzugt von 600 bis 3000 Da aufweisen. Ihre Hydroxylzahl kann 22 bis 400, bevorzugt 50 bis 300 und besonders bevorzugt 80 bis 200 mg KOH/g betragen. Die OH-Funktionalität kann im Bereich von 1,5 bis 6, bevorzugt von 1,8 bis 3 und besonders bevorzugt von 1,9 bis 2,5 liegen.

Gut geeignete Hydroxy Gruppen aufweisende Polyesterpolyole ii) sind die an sich bekannten Polykondensate aus Di- sowie gegebenenfalls Poly(Tri,Tetra)olen und Disowie gegebenenfalls Poly(Tri,-Tetra)carbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden. Beispiele für geeignete Diole sind Ethylenglykol, Butylenglykol, Diethylenglykol, Triethylenglykol, Polyalkylenglykole wie Polyethylenglykol, weiterhin Propandiol oder Butandiol(1,4), bevorzugt sind Hexandiol(1,6), Neopentylglykol oder Hydroxypivalinsäureneopentylglykolester. Gegebenenfalls können auch Polyole wie beispielsweise Trimethylolpropan, Glycerin, Erythrit, Pentaerythrit, Trimethylolbenzol oder Trishydroxyethylisocyanurat mitverwendet werden.

Geeignete Dicarbonsäuren sind beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbernsteinsäure, 3,3-Diethylglutarsäure, 2,2-Dimethylbernsteinsäure. Die möglichen Anhydride dieser Säuren sind ebenfalls geeignet. Im Sinne der vorliegenden Erfindung werden die Anhydride immer durch den Ausdruck "Säure" mitumfasst.

Es können auch Monocarbonsäuren, wie Benzoesäure und Hexancarbonsäure verwendet werden, vorausgesetzt, dass die mittlere Funktionalität des Polyols höher als 2 ist. Gesättigte aliphatische oder aromatische Säuren wie Adipinsäure oder Isophthalsäure sind bevorzugt. Gegebenenfalls können auch kleinere Mengen Polycarbonsäure, wie Trimellitsäure miteingesetzt werden.

Hydroxycarbonsäuren, die als Reaktionsteilnehmer bei der Herstellung eines Polyesterpolyols mit endständigen Hydroxylgruppen verwendet werden können, sind beispielsweise Hydroxycapronsäure, Hydroxybuttersäure, Hydroxydecansäure, Hydroxystearinsäure und dergleichen. Geeignete Lactone sind z.B. Caprolacton oder Butyrolacton.

Geeignete Polyisocyanate iii) sind z.B. Diisocyanate des Molekulargewichtsbereichs 140 bis 400 mit aliphatisch, cycloaliphatisch, araliphatisch und / oder aromatisch gebundenen Isocyanatgruppen, wie z.B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanatomethylcyclohexan, Bis-(isocyanatomethyl)-norbornan, 1,3- und 1,4-Bis-(2-isocyanato-prop-2-yl)-benzol (TMXDI), 2,4- und 2,6-Diisocyanatotoluol (TDI), 2,4'- und 4,4'-Diisocyanatodiphenylmethan, 1,5-Diisocyanatonaphthalin oder beliebige Gemische solcher Diisocyanate. Bevorzugt handelt es sich um Polyisocyanate oder Polyisocyanatgemische der genannten Art mit ausschließlich aliphatisch und / oder cycloaliphatisch gebundenen Isocyanatgruppen. Besonders bevorzugte sind Polyisocyanate oder Polyisocyanatgemische auf Basis von HDI, IPDI und / oder 4,4'-Diisocyanatodicyclohexylmethan.

Neben diesen einfachen Diisocyanaten sind auch solche Polyisocyanate geeignet, die Heteroatome in dem die Isocyanatgruppen verknüpfenden Rest enthalten und / oder eine Funktionalität von mehr als 2 Isocyanat-Gruppen pro Molekül besitzen. Die erstgenannten sind z.B. durch Modifizierung einfacher aliphatischer, cycloaliphatischer, araliphatischer und / oder aromatischer Diisocyanate hergestellte, aus mindestens zwei Diisocyanaten aufgebaute Polyisocyanate mit Uretdion-, Isocyanurat-, Urethan-, Allophanat-, Biuret-, Carbodiimid-, Iminooxadiazindion- und / oder Oxadiazintrionstruktur; als Beispiel für ein nicht-modifiziertes Polyisocyanat mit mehr als 2 Isocyanat-Gruppen pro Molekül sei z.B. 4-Isocyanatomethyl-1,8-octandiisocyanat (Nonantriisocyanat) genannt.

Das Polyisocyanat iii) kann insbesondere ein aliphatisches Isocyanat, bevorzugt ein aliphatisches Diisocyanat und besonders bevorzugt wenigstens eine Verbindung ausgewählt aus der Gruppe von Hexamethylendiisocyanat, Isophorondiisocyanat, 1-Isocyanato-4-[(4-isocyanatocyclohexyl) methyl]cyclohexan umfassen.

Bei der Verbindung iv) kann es sich um ionische oder potentiell ionische Verbindungen handeln. Beispiele sind Mono- und Dihydroxycarbonsäuren, Mono- und Diaminocarbonsäuren, Mono- und Dihydroxysulfonsäuren, Mono- und Diaminosulfonsäuren und ihre Salze wie Dihydroxycarbonsäuren, Hydroxypivalinsäure, N-(2-Aminoethyl)-β-alanin, 2-(2-Amino-ethylamino)-ethansulfonsäure, Ethylendiaminpropyl- oder Butylsulfonsäure, 1,2- oder 1,3-Propylendiamin-β-ethylsulfonsäure, Lysin, 3,5-Diaminobenzoesäure, das Hydrophilierungsmittel gemäß Beispiel 1 aus der EP-A 0 916 647 und deren Alkali- und / oder Ammoniumsalze; das Addukt von Natriumbisulfit an Buten-2-diol-1,4-Polyethersulfonat oder das propoxylierte Addukt aus 2-Butendiol und NaHSO₃ (z.B. in der DE-A 2 446 440, Seite 5-9, Formel I-III). Bevorzugte ionische oder potentielle ionische Verbindungen sind solche, die über Carboxy- und / oder Carboxylatgruppen verfügen. Besonders bevorzugte ionische Verbindungen sind Dihydroxycarbonsäuren, insbesondere α,α-Dimethylolalkansäuren, wie 2,2-Dimethylolessigsäure, 2,2-Dimethylolpropionsäure, 2,2-Dimethylolbuttersäure, 2,2-Dimethylolpentansäure oder Dihydroxybernsteinsäure.

Zusätzlich können bei der Herstellung des Hydroxy-funktionellen Prepolymers a) auch noch niedermolekulare Kettenverlängerer mit einem Molekulargewicht im Bereich von 60 bis 400 Da und bevorzugt von 62 bis 200 Da und wenigstens zwei Isocyanat reaktiven Gruppen mit umgesetzt werden. Bei den Kettenverlängerern kann es sich beispielsweise um Polyole oder Polyamine handeln.

Als Kettenverlängerer geeignete Polyole können Verbindungen mit bis zu 20 Kohlenstoffatomen je Molekül, wie z.B. Ethylenglykol, Diethylenglykol, Triethylenglykol, 1,2-Propandiol, 1,3-Propandiol, 1,4-Butandiol, 1,3-Butylenglykol, Cyclohexandiol, 1,4-Cyclohexandimethanol, 1,6-Hexandiol, Hydrochinondihydroxyethylether, Bisphenol A [2,2-Bis(4-hydroxyphenyl)propan], hydriertes Bisphenol A (2,2-Bis(4-hydroxycyclohexyl)propan) sowie deren Mischungen, sowie Trimethylolpropan, Glycerin oder Pentaerythrit verwendet werden. Auch Esterdiole wie z.B. δ-Hydroxybutyl-ε-hydroxy-capronsäureester, ω-Hydroxy¬hexyl-γ-hydroxybuttersäureester, Adipinsäure-(β-hydroxyethyl)ester oder Terephthalsäurebis(β-hydroxyethyl)ester können eingesetzt werden.

Geeignete Polyamine zur Kettenverlängerung sind z.B. Ethylendiamin, 1,2- und 1,3-Diaminopropan, 1,4-Diaminobutan, 1,6-Diaminohexan, Isophorondiamin, das Isomerengemisch von 2,2,4- und 2,4,4-Trimethylhexamethylendiamin, 2-Methylpentamethylendiamin, Diethylentriamin, 1,3- und 1,4-Xylylendiamin, α,α,α',α'-Tetramethyl-1,3- und -1,4-xylylendiamin und 4,4-Diaminodicyclohexylmethan, Dimethylethylendiamin, Hydrazin oder Adipinsäuredihydrazid.

Bei der Herstellung des Hydroxy-funktionellen Prepolymers a) kann auch noch ein Kettenabbrecher mit umgesetzt werden. Diese Bausteine leiten sich beispielsweise von monofunktionellen, mit Isocyanat Gruppen reaktiven Verbindungen, wie Monoaminen, insbesondere mono-sekundären Aminen oder Monoalkoholen ab. Genannt seien hier insbesondere Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-Methylaminopropylamin, Diethyl(methyl)aminopropylamin, Morpholin, Piperidin oder deren substituierte Derivate, Amidamine aus diprimären Aminen und Monocarbonsäuren, Monoketimine von diprimären Aminen, primär / tertiäre Amine, wie z.B. N,N-Dimethylaminopropylamin.

Für das Polyurethanharz können auch Einheiten Verwendung finden, die an den Kettenenden lokalisiert sind und dieses abdeckt. Diese Einheiten stammen einerseits von monofunktionellen, isocyanat-reaktiven Komponenten, insbesondere mono-sekundäre Amine oder Monoalkohole. Im Folgenden werden einige dieser Substanzen beispielhaft erläutert: Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-methylaminopropylamin, Diethyl(methyl)aminopropylamin, Morpholin, Piperidin, oder substituierte Derivate der genannten Verbindungen. Amidoamine von diprimären Aminen und Mono, Monocarbonsäuren, Monoketimine der Diprimären Amine, primäre/sekundäre/tertiäre Amine - wie beispielsweise - N,N-Dimethylaminopropylamin, Methyldimethylamin.

Ebenso geeignete Verbindungen, sind Substanzen, die aktive Wasserstoffatome enthalten, die in der Reaktivität zwischen den Isocyanatgruppen unterscheiden können. Dies sind beispielsweise Moleküle die neben einer primären Aminogruppe auch eine sekundäre Aminogruppe oder neben einer OH Gruppe auch eine COOH Gruppe oder neben einer Aminogruppe (primär oder sekundär) auch OH Gruppen enthalten. Bevorzugt sind Komponenten, die neben einer Aminogruppe (primär oder sekundär) auch OH Gruppen enthalten. Beispiele für solche primären / sekundären Amine sind: 3-Amino-1-methylaminopropan, 3-Amino-1-ethylaminopropan, 3-Amino-1-cyclohexylaminopropan, 3-Amino-1-methylaminobutan; Mono-hydroxy-carboxylsäuren, wie beispielsweise Hydroxyessigsäure, Milchsäure oder Maleinsäure, und auch Alkanolamine wie beispielsweise N-Aminoethylethanolamin, Ethanolamin, 3-Aminopropanol, Neopentanolamin, und, mit entsprechender Bevorzugung, Diethanolamin, Methyldiethanolamin. Auf diese Weise ist es möglich in das Polymer zusätzliche funtkionelle Gruppen einzuführen.

Ebenfalls sind als Kettenabbrecherverbindungen geeignet, die aktive Wasserstoffatome mit gegenüber Isocyanat-Gruppen unterschiedlicher Reaktivität enthalten. Dies sind z.B. Verbindungen, die neben einer primären Aminogruppe auch sekundäre Aminogruppen oder neben einer OH-Gruppe auch COOH-Gruppen oder neben einer Aminogruppe (primär oder sekundär) auch OH-Gruppen aufweisen. Bevorzugt sind Verbindungen, die neben einer Aminogruppe (primär oder sekundär) auch OH-Gruppen aufweisen. Beispiele hierfür sind primäre / sekundäre Amine, wie 3-Amino-1-Methylaminopropan, 3-Amino-1-Ethylaminopropan, 3-Amino-1-cyclohexylaminopropan, 3-Amino-1-Methylaminobutan; Mono-Hydroxycarbonsäuren, wie Hydroxyessigsäure, Milchsäure oder Äpfelsäure, weiterhin Alkanolamine wie N-Aminoethylethanolamin, Ethanolamin, 3-Aminopropanol, Neopentanolamin und besonders bevorzugt Diethanolamin. Auf diese Weise können zusätzlich funktionelle Gruppen in das polymere Endprodukt eingebracht werden.

Es ist ebenfalls möglich, dass bei der Herstellung des Hydroxy-funktionellen Prepolymers a) auch noch nichtionisch hydrophilierend wirkende Verbindungen, z.B. Polyoxyalkylenether mit mindestens einer Hydroxy- oder Aminogruppe, mit umgesetzt werden. Diese Polyether enthalten einen Anteil von 30 Gew.-% bis 100 Gew.-% an Bausteinen, die vom Ethylenoxid abgeleitet sind. In Frage kommen linear aufgebaute Polyether mit einer Funktionalität zwischen 1 und 3, aber auch Verbindungen der allgemeinen Formel (I), 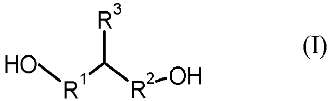 in welcher
R₁ und Runabhängig voneinander jeweils einen zweiwertigen aliphatischen, cycloaliphatischen oder aromatischen Rest mit 1 bis 18 C-Atomen, die durch Sauerstoff und / oder Stickstoffatome unterbrochen sein können, bedeuten und
R₃ für einen nicht-hydroxyterminierten Polyester oder bevorzugt Polyether, insbesondere für einen alkoxyterminierten Polyethylenoxidrest steht.

Die Urethanisierungsreaktion bei der Prepolymer-Herstellung kann bei Temperaturen von 0° bis 140°C, je nach Reaktivität des eingesetzten Polyisocyanats, durchgeführt werden. Zur Beschleunigung der Urethanisierungsreaktion können geeignete Katalysatoren, wie sie zur Beschleunigung der NCO-OH-Reaktion dem Fachmann bekannt sind, eingesetzt werden. Beispiele sind tertiäre Amine wie z.B. Triethylamin, Organozinnverbindungen wie z.B. Dibutylzinnoxid, Dibutylzinndilaurat oder Zinn-bis(2-ethylhexanoat) oder andere metallorganische Verbindungen.

Als Vernetzer geeignete Verbindungen sind Melamin Formaldehyd oder Urea Formaldehyd Kondensate, wie sie beispielsweise in D.H. Solomon, The Chemistry of Organic Filmformers, Seiten 235 ff., John Wiley & Sons, Inc., New York, 1967 beschrieben sind. Die Melaminharze können aber auch vollständig oder teilweise gegen andere Aminharze wie sie beispielsweise in Methoden der organischen Chemie (Houben-Weyl), Vol. 14/2, Teil2, 4th Edition, Georg Thieme Verlag, Stuttgart 1963, Seiten 319 ff. beschrieben sind, ersetzt werden.

Andere geeignete Vernetzungsharze sind blockierte Polyisocyanate, basierend beispielsweise auf Isophorondiisocyanat, Hexametzhylendiisocyanat, 1,4-Diisocyanatcyclohexan, Bis-(4-Isocyanatcyclohexyl)-methan, 1,3-Diisocyanatbenzol, 1,4-Diisocyanatbenzol, 2,4-Diisocyanat-1-methyl-benzol ,1,3-Diisocyanat-2-methylbenzol, 1,3-Bis-isocyanatmethylbenzol, 2,4-bis-Isocyanatmethyl-1,5-dimethylbenzol, Bis-(4-isocyanatphenyl)-propan, Tris-(4-Isocyanatphenyl)methan und / oder Trimethyl-1,6-diisocyanathexan.

Des Weiteren sind ebenfalls blockierte Isocyanataddukte wie beispielsweise Biuretpolyisocyanate basierend auf 1,6-Diisocyanathexan; Isocyanurat Polyisocyanate basierend auf 1,6-Diisocyanathexan; oder Urethanmodifizierte Polyisocyanataddukte hergestellt aus 2,4-und / oder 2,6-Diisocyanatotoluol oder Isophorondiisocyanat und niedrig molekulargewichtige Polyhydroxyl Komponenten (wie beispielsweise Trimethylolpropan, die isomeren Propandiol oder Butandiol oder Mischungen solcher Polyhydroxylkomponenenten), wobei die Isocyanatgruppe des Polyisocyanatadduktes blockiert ist, geeignet.

Geeignete Blockierungsmittel für diese Polyisocyanate sind monofunktionelle Alkohole, wie Methanol, Ethanol, Butanol, Hexanol und Benzylalkohol; Oxime wie Acetoxime und Methylethylketoxim; Laktame wie Epsiloncaprolactam; Phenol; und CH-acide Komponenten wie beispielsweise Diethylmalonat.

Ebenfalls geeignete Vernetzer sind Polyisocyanatvernetzer, Amid- und Aminformaldehydharze, Phenolharze, Aldehydharze und Ketonharze, wie beispielsweise Phenolformaldehydharz, Resole, Furanharze, Ureaharze, Carbaminesterharze, Triazinharze, Melaminharze, Benzoguanaminharze, Cyanamidharze, Anilinharze, wie dies in ,Lackharze', D. Stoye, W.Freitag, Carl Hanser Verlag, München, 1996, beschrieben ist.

Bei einer bevorzugten Ausführungsform kann der Vernetzer c) als gegenüber Hydroxy reaktive Gruppen wenigstens zwei Isocyanat Gruppen aufweisen.

Geeignete Isocyanat funktionalisierte Vernetzer sind beispielsweise niedrig viskose, hydrophobe oder hydrophilisierte Polyisocyanate mit freien Isocyanatgruppen, basierend auf aliphatischen, cycloaliphatischen, araliphatischen und / oder aromatischen Isocyanaten, besonders bevorzugt basierend auf aliphatischen oder cycloaliphatischen Isocyanaten, da es auf diesem Wege möglich ist ein besonders hohes Niveau an Widerstandsfähigkeit im Lackfilm einzustellen. Der Vorteil der Bindemitteldispersion in dieser Erfindung ist insbesondere in Kombination mit diesen Vernetzern gegeben. Wenn notwendig können die Polyisocyanate auch als Mischung des Polyisocyanates und kleiner Mengen von inerten Lösungsmitteln oder inerten Lösungsmittelgemischen - zur Reduktion des Viskositätsniveau - eingesetzt werden. Triisocyanatnonane können ebenso alleine oder in Mischung mit anderen als Vernetzungskomponente eingesetzt werden.

Vorteilhaft ist auch, wenn der Vernetzer c) eine Viskosität bei 23° C von 10 bis 10000 mPas aufweist.

Die Viskosität des Vernetzers kann dabei gemäß DIN 53019 bei einem Schergefälle von 40 s⁻¹ bestimmt werden.

Die erfindungsgemäße Beschichtung kann weitere Zusatzstoffe enthalten. Diese sind hierbei ausgewählt aus der Gruppe, bestehend aus Licht-schutzmitteln, wie UV-Absorber und reversible Radikalfänger, und / oder Antioxidationsmittel und / oder Netzmittel und / oder Substratnetzmittel und / oder Emulgatoren und / oder Verlaufmittel und / oder filmbildende Hilfsmittel und / oder Rheologiehilfsmittel und / oder Flammschutzmittel und / oder Biozide und / oder Neutralisationsmittel und / oder Entschäumer und / oder Verdicker und / oder anorganische Füllstoffe und / oder organische Füllstoffe und / oder Pigmente.

Besonders zweckmäßig ist es, wenn die Beschichtung wenigstens eine filmbildende Polymerdispersion enthält. Diese filmbildende Polymerdispersion ist bevorzugt auf der Basis wenigstens eines Polyurethans und / oder wenigstens eines Polyurethanacrylats und / oder wenigstens eines Polyacrylats.

Zusätzlich können weitere, dem Fachmann bekannte, Zusatzstoffe eingesetzt werden. Beschrieben werden diese Zusatzstoffe unter anderem in:
- Lehrbuch "Lackadditive" von Johann Bielemann, Wiley-VCH, Weinheim, New York 1998.
- Lehrbuch der Lacke und Beschichtungen, Band 4 (Lösemittel, Weichmacher, Additive), herausgegeben von Martina Oertelt, 2. Auflage, S. Hirzel Verlag, Stuttgart 2007.

Als Basismaterial der erfindungsgemäßen geprägten, verformbaren Folie wird vorzugsweise ein Kunststoffmaterial eingesetzt, welches aus einer Polymermischung besteht, die auf der Basis von Polyvinylchlorid (PVC), insbesondere Weich-PVC, Polyurethan (PUR), Polyolefin, Polyester (PES), Acrylnitril-Butadien-Styrol-Copolymer (ABS), Polymethylmethacrylat, Polycarbonat, Polyacrylat oder Mischpolymeren ist. Geeignete Polyurethane sind beispielsweise in EP1059379B1 beschrieben, während geeignete Polyolefine beispielhaft in EP1254752B1 oder auch in EP1688460B1 offenbart werden. Es ist ebenso möglich, dass das Basismaterial zusätzlich wenigstens einen polaren oder unpolare Kautschuk, wie bspw. Naturkautschuk, Butadienkautschuk, Ethylen-Propylen-Kautschuke, etc. enthält.

Das Basismaterial kann ein- oder mehrlagig ausgebildet sein. Hierbei kann wenigstens eine Lage als geschäumte Lage vorliegen. So kann zum Beispiel eine erste Lage des Basismaterials auf der Basis wenigstens eines thermoplastischen Olefins sein und eine zweite Lage auf der Basis eines Polyolefinschaums.

Als Basismaterial sind aber auch Bespannmaterialien, so genannte Kunstleder, auf Basis PVC, PUR oder TPO, möglich.

Das Basismaterial wird häufig auch als Substrat bezeichnet.

Die geprägte, verformbare Folie ist bevorzugt ein- oder mehrlagig ausgebildet. Im Sinne der vorliegenden Erfindung bedeutet verformbar, dass die Folie während der Formgebung verformbar ist bzw. verformt wird. Die Verformung der Folie kann hierbei kalt (Kaltverformung) oder warm (Warmverformung) erfolgen. Es kommen hierbei alle der fachkundigen Person bekannten Verformungsarten - und verfahren in Frage. Besonders gut geeignet ist beispielsweise das Standard-Tiefziehverfahren bei dem das Einformen einer vorher hergestellten und durch Walzverfahren mit einer Oberflächen-Prägung oder - Narbung versehenen Folie in eine dreidimensionale, bauteil-geometrische Struktur durch das Einfahren eines die spätere Bauteilkontur bildenden Tiefziehstempels in die Folie erfolgt. Dieses Standard-Tiefziehverfahren kann kalt oder warm durchgeführt werden. Ein weiteres Verfahren zur Herstellung von werkzeugfallenden einzelnen Formkörpern ist das "In-Mould-Graining-Verfahren (IMG-Verfahren)", welches sich als Spezialverfahren aus dem Negativ-Tiefziehverfahren entwickelt hat und in der Regel warm durchgeführt wird. Beim In-Mould-Graining (IMG)-Verfahren wird eine ein- oder mehrlagige lackierte Folie während der thermoplastischen Verformung im Werkzeug genarbt. Das IMG-Verfahren und weitere anwendbare formgebende Verfahren sind beispielsweise in EP 1948421B1 oder auch in EP2263856B1 beschrieben.

Es ist aber auch Möglich, dass die Folie mittels verschiedener Kaschierverfahren verformbar ist. Diese Kaschierverfahren werden in der Regel kalt ausgeführt. Hierbei kommen neben dem besonders bevorzugten Presskaschieren mit zwei harten Werkzeughälften, auch das Membrankaschieren, Kombinationsverfahren aus Presskaschieren, Umbugen und Schneiden/Stanzen sowie das Lederkaschieren in Frage.

Bevorzugt ist die geprägte, verformbare Folie tiefgezogen. Bei tiefziehfähigen Folien ergeben sich besonders gute Vorteile hinsichtlich der durchgängigen Mattigkeit in den Narbentälern und den Narbenkuppen.

Die geprägte, verformbare Folie findet bevorzugt als Material für den Automobilinnenraum, vor allem in Form einer Armaturentafel oder eines Innenverkleidungsteils, insbesondere eines Sitzbespannmaterials, für ein Fahrzeug, Verwendung.

Die Dekoroberfläche kann ebenso ein- oder mehrlagig ausgeführt sein. Ebenso kann die Beschichtung der Dekoroberfläche ein- oder mehrlagig ausgeführt sein. So kann die erfindungsgemäße Beschichtung als Primer, als Fondlack, aber auch als Schlußlack verwendet werden. Die Beschichtungslagen können dabei die gleiche Zusammensetzung aufweisen, sie können aber auch verschieden zusammengesetzt sein.

Die geprägte, verformbare Folie soll nun anhand der Ausführungsbeispiele V1, V2, E1 und E2 und entsprechenden Versuchsergebnissen, die in Tabelle 1 dargestellt sind, näher erläutert werden. Alle Angaben in den Ausführungsbeispielen sind Gew. -%-Angaben.

### Ausführungsbeispiele V1 und V2

### Fondlack:

| | |
|---|---|
| Lösemittelbasierende Polyurethan-Dispersion | 32,8 |
| Verdünnung (Toluol / IPA 50/50) | 64,2 |
| Mattierung ( anorganisch) | 1,4 |
| Polyisocyanat (HDI-Biuret) | 1,6 |

### Schlußlack:

| | |
|---|---|
| Wässerige, hochmolekulare Polyurethan-Dispersion | 21,60 |
| Polymerorganische Mattierung | 47,20 |
| Verdünnung (2-Propanol / Wasser 50/50) | 21,86 |
| Dimethylaminoethanol | 0,19 |
| Entschäumer | 0,43 |
| Substratnetzmittel | 0,43 |
| Gleitadditiv | 4,30 |
| Verdicker / dem. Wasser (1:1) | 1,51 |
| Dem. Wasser | 1,00 |
| Polyisocyanat (HDI-Trimerisat) | 1,48 |

### Ausführungsbeispiele E1 und E2

### Primer:

| | |
|---|---|
| Wässerige, hochmolekulare Polyurethan-Dispersion | 49,12 |
| Verdünnung (2-Propanol / Wasser 50/50) | 30,00 |
| Dimethylaminoethanol | 0,26 |
| Entschäumer | 0,39 |
| Verdicker / dem. Wasser (1:1) | 2,30 |
| Dem. Wasser (1:1) | 15,64 |
| Polyisocyanat (HDI-Trimerisat) | 1,90 |

### Fondlack:

| | |
|---|---|
| Wässerige, hochmolekulare Polyurethan-Dispersion Erfindungsgemäße wässrige, niedermolekulare | 12,48 |
| Polyurethan-Dispersion | 28,18 |
| Verdünnung (2-Propanol / Wasser 50/50) | 35,47 |
| Mattierungsbatch (anorganisch) | 15,67 |
| Dimethylaminoethanol | 0,72 |
| Entschäumer | 0,39 |
| Substratnetzmittel | 0,39 |
| Verdicker / dem. Wasser (1:1) | 5,91 |
| Polyisocyanat (HDI-Trimerisat) | 0,79 |

### Schlußlack:

| | |
|---|---|
| Wässerige, hochmolekulare Polyurethan-Dispersion | 21,60 |
| Polymerorganische Mattierung | 47,20 |
| Verdünnung (2-Propanol / Wasser 50/50) | 21,86 |
| Dimethylaminoethanol | 0,19 |
| Entschäumer | 0,43 |
| Substratnetzmittel | 0,43 |
| Gleitadditiv | 4,30 |
| Verdicker / dem. Wasser (1:1) | 1,51 |
| Dem. Wasser | 1,00 |
| Polyisocyanat (HDI-Trimerisat) | 1,48 |

**Tabelle 1**

| **Eigenschaft** | **V1** | **E1** | **V2** | **E2** |
|---|---|---|---|---|
| Farbechtheit und Alterung Gemäß DIN EN ISO 105-B06 (10 Zyklen) | 4,5 | 4,5 | 4,5 | 4,5 |
| Sonnensimulationstest gemäß DIN 75220 D-IN1-T Trim: ΔE* / ΔL* | 0,3 / -0,3 | 0,4 / 0,4 | 1,2 / -1,2 | 0,9 / -0,9 |
| Fingernageltest (15N) | ok | ok | ok | ok |
| Hand-Abriebprüfung (BMW-Abrex) | -- | ok | -- | ok |
| Glänzende Narbtäler nach Thermoverformung | Nicht ok | ok | Nicht ok | ok |

Die Folien V1 und V2 enthalten jeweils keine erfindungsgemäße wässrige, niedermolekulare Polyurethan-Dispersion. V1 und E1 enthalten jeweils ein Polyolefin-Basismaterial und sind strahlenvernetzt, während V2 und E2 als Basismaterial ebenso Polyolefin enthalten, aber unvernetzt sind.

Weiterhin ergeben sich für die erfindungsgemäßen Folien nur ein geringer Bestandteil an volatilen organischen Verbindungen (VOC-Test gemäß VDA278) von 13µg/g TÄ (Toluol frei) im Vergleich zu den Referenzfolien V1 und V2 mit 189 µg/g TÄ (davon 171 µg/g TÄ Toluol).

## Patentansprüche

1. Geprägte, verformbare Folie mit Dekoroberfläche, **gekennzeichnet dadurch, dass** die Dekoroberfläche eine Beschichtung aufweist, welche folgende Bestandteile enthält:
a) eine wässrige Dispersion eines Hydroxy-funktionellen Prepolymers, erhältlich durch Umsetzung wenigstens der folgenden Komponenten:
i) einem Hydroxygruppen aufweisenden Polycarbonatpolyol,
ii) einem Hydroxygruppen aufweisenden Polyesterpolyol,
iii) einem Isocyanatgruppen aufweisendem Polyisocyanat,
iv) einer Verbindung, die wenigstens zwei gegenüber Isocyanatgruppen reaktive Gruppen und wenigstens eine zur Anionenbildung befähigte Gruppe aufweist,
v) Wasser,
wobei die Komponenten i) bis iii) und das Verhältnis der Komponenten i) bis iii) so gewählt werden, dass gegenüber den Isocyanat Gruppen ein Überschuss an Hydroxy Gruppen vorhanden ist, und
b) Nanopartikel mit einer zahlenmittleren Partikelgröße gemessen mittels Laserkorrelationsspektroskopie von 5 bis 100 nm, wobei die Nanopartikel Siliziumdioxid, Titandioxid, Aluminiumoxid, Aluminiumdioxid, Mangandioxid, Manganoxid, Zinkoxid, Zinkdioxid, Ceroxid, Cerdioxid, Eisenoxid, Eisendioxid und / oder Calciumcarbonat umfassen oder daraus bestehen, und
c) einen Vernetzer, der wenigstens zwei gegenüber Hydroxygruppen reaktive Gruppen aufweist.

2. Geprägte, verformbare Folie mit Dekoroberfläche nach Anspruch 1, **dadurch gekennzeichnet, dass** die Beschichtung zusätzlich wenigstens ein Mattierungsmittel enthält.

3. Geprägte, verformbare Folie mit Dekoroberfläche nach Anspruch 1 oder 2, **dadurch gekennzeichnet, dass** sie während des formgebenden Verfahrens verformbar ist bzw. verformt wird.

4. Geprägte, verformbare Folie mit Dekoroberfläche nach einem der Ansprüche 1 bis 3, **dadurch gekennzeichnet, dass** sie als ein- oder mehrlagige Folie ausgebildet ist.

5. Geprägte, verformbare Folie mit Dekoroberfläche nach einem der Ansprüche 1 bis 4, **dadurch gekennzeichnet, dass** die Folie tiefgezogen ist.

6. Geprägte, verformbare Folie mit Dekoroberfläche nach einem der Ansprüche 1 bis 5, **dadurch gekennzeichnet, dass** als Basismaterial ein Kunststoffmaterial auf der Basis von Polyolefin vorhanden ist.

7. Verwendung einer geprägten, verformbaren Folie mit Dekoroberfläche nach einem der Ansprüche 1 bis 6 im Automobilinnenraum.

## Claims

1. Embossed, deformable film with decorative surface, **characterized in that** the decorative surface has a coating which contains constituents as follows:
a) an aqueous dispersion of a hydroxy-functional prepolymer, obtainable by reaction at least of the following components:
i) a polycarbonate polyol having hydroxyl groups,
ii) a polyester polyol having hydroxyl groups,
iii) a polyisocyanate having isocyanate groups,
iv) a compound which has at least two groups reactive towards isocyanate groups, and at least one group capable of forming anions,
v) water,
where components i) to iii) and the ratio of components i) to iii) are selected such that there is an excess of hydroxyl groups over the isocyanate groups, and
b) nanoparticles having a number-average particle size, measured by means of laser correlation spectroscopy, of 5 to 100 nm, where the nanoparticles comprise or consist of silicon dioxide, titanium dioxide, aluminium oxide, aluminium dioxide, manganese dioxide, manganese oxide, zinc oxide, zinc dioxide, cerium oxide, cerium dioxide, iron oxide, iron dioxide and/or calcium carbonate, and
c) a crosslinker which has at least two groups reactive towards hydroxyl groups.

2. Embossed, deformable film with decorative surface according to Claim 1, **characterized in that** the coating additionally contains at least one dulling agent.

3. Embossed, deformable film with decorative surface according to Claim 1 or 2, **characterized in that** it is deformable/deformed during the shaping process.

4. Embossed, deformable film with decorative surface according to any of Claims 1 to 3, **characterized in that** it is configured as a single-ply or multi-ply film.

5. Embossed, deformable film with decorative surface according to any of Claims 1 to 4, **characterized in that** the film is thermoformed.

6. Embossed, deformable film with decorative surface according to any of Claims 1 to 5, **characterized in that** the base material comprises a plastics material based on polyolefin.

7. Use of an embossed, deformable film with decorative surface according to any of Claims 1 to 6 in a motor vehicle interior.

## Revendications

1. Film déformable, gaufré, à surface décorative, **caractérisé en ce que** la surface décorative comporte un revêtement qui contient les constituants suivants :
a) une dispersion aqueuse d'un prépolymère à fonction hydroxy, pouvant être obtenu par mise en réaction d'au moins les composants suivants :
i) un polycarbonatepolyol comportant des groupes hydroxy,
ii) un polyesterpolyol comportant des groupes hydroxy,
iii) un polyisocyanate comportant des groupes isocyanate,
iv) un composé qui comporte au moins deux groupes réactifs vis-à-vis de groupes isocyanate et au moins un groupe apte à la formation d'anions,
v) de l'eau,
les composants i) à iii) et le rapport des composants i) à iii) étant choisis de telle façon que soit présent un excès de groupes hydroxy par rapport aux groupes isocyanate, et
b) des nanoarticules ayant une taille de particule en moyenne en nombre de 5 à 100 nm, mesurée par spectroscopie de corrélation laser, les nanoparticules comprenant du dioxyde de silicium, du dioxyde de titane, de l'oxyde d'aluminium, du dioxyde d'aluminium, du dioxyde de manganèse, de l'oxyde de manganèse, de l'oxyde de zinc, du dioxyde de zinc, de l'oxyde de cérium, du dioxyde de cérium, de l'oxyde de fer, du dioxyde de fer et/ou du carbonate de calcium ou consistant en ceux-ci, et
c) un agent de réticulation qui comporte au moins deux groupes réactifs vis-à-vis de groupes hydroxy.

2. Film déformable, gaufré, à surface décorative selon la revendication 1, **caractérisé en ce que** le revêtement contient en outre au moins un agent de matité.

3. Film déformable, gaufré, à surface décorative selon la revendication 1 ou 2, **caractérisé en ce qu'**il est déformable ou déformé pendant le processus de mise en forme.

4. Film déformable, gaufré, à surface décorative selon l'une quelconque des revendications 1 à 3, **caractérisé en ce qu'**il est configuré sous forme d'un film mono- ou multicouche.

5. Film déformable, gaufré, à surface décorative selon l'une quelconque des revendications 1 à 4, **caractérisé en ce que** le film est embouti.

6. Film déformable, gaufré, à surface décorative selon l'une quelconque des revendications 1 à 5, **caractérisé en ce qu'**un matériau en matière plastique à base de polyoléfine est présent en tant que matériau de base.

7. Utilisation d'un film déformable, gaufré, à surface décorative selon l'une quelconque des revendications 1 à 6 dans l'habitacle d'automobiles.
